# EUROPÄISCHE PATENTSCHRIFT

(11) **EP 3 945 004 B1**
(45) Veröffentlichungstag und Bekanntmachung des Hinweises auf die Patenterteilung: **31.01.2024**
(21) Anmeldenummer: 20188598.5
(22) Anmeldetag: 30.07.2020
(51) Int. Cl.: B61D 27/00, B60H 1/00

(54) **PERSONENTRANSPORTANORDNUNG FÜR EINEN REISEZUGWAGEN ODER EINEN OMNIBUS SOWIE VERFAHREN ZUM HEIZEN UND/ODER LÜFTEN EINES FAHRGASTGROSSRAUMS**
PASSENGER TRANSPORTATION ARRANGEMENT FOR A PASSENGER TRAIN CARRIAGE OR AN OMNIBUS AND METHOD FOR HEATING AND/OR VENTING AN OPEN-PLAN CARRIAGE
PERSONNES TRANSPORT ASSEMBLAGE POUR UNE VOITURE DE GRANDES LIGNES OU UN AUTOBUS ET PROCEDURE DE CHAUFFER ET/OU AERER UN PASSAGER GRAND COMPARTIMENT

(43) Veröffentlichungstag der Anmeldung: 02.02.2022
(73) Patentinhaber: Wißmann, Gregor, 46284 Dorsten (DE); Wißmann, Meike, 82223 Eichenau (DE); Wißmann, Christoph, 49716 Meppen (DE); Stankewitz, Lothar, 46284 Dorsten NRW (DE)
(72) Erfinder: Wißmann, Bernhard, 46284 Dorsten NRW (DE); Stankewitz, Lothar, 46284 Dorsten NRW (DE)
(74) Vertreter: Schatz, Markus Franz-Josef

(56) Entgegenhaltungen:
- EP-A1- 3 621 409
- CN-A- 105 946 884
- CN-A- 110 723 157
- US-A- 3 862 549
- US-A- 5 389 035

## Beschreibung

### Technisches Gebiet

Die Erfindung betrifft eine Personentransportanordnung für einen Reisezugwagen oder einen Omnibus, aufweisend wenigstens einen Fahrgastgroßraum und wenigstens ein System zum Heizen und/oder Lüften des Fahrgastgroßraums, wobei das System wenigstens eine Zulufteinrichtung zum Einführen von Zuluft in den Fahrgastgroßraum und wenigstens eine Ablufteinrichtung zum Abführen von Abluft aus dem Fahrgastgroßraum aufweist, wobei die Zulufteinrichtung wenigstens ein Deckenelement aufweist, das zumindest einen Abschnitt einer Decke des Fahrgastgroßraums bildet, und wobei die Ablufteinrichtung wenigstens zwei langgestreckt ausgebildete Luftabführeinheiten aufweist, die sich in einer Längsrichtung des Fahrgastgroßraums jeweils zumindest über wenigstens einen Sitzbereich des Fahrgastgroßraums durchgehend erstrecken und die an bodenseitigen Endabschnitten von einander gegenüberliegend angeordneten Seitenwänden des Fahrgastgroßraums angeordnet sind. Zudem betrifft die Erfindung ein Verfahren zum Heizen und/oder Lüften eines Fahrgastgroßraums einer Personentransportanordnung eines Reisezugwagens oder eines Omnibus, wobei eine Abluft im Bereich von bodenseitigen Endabschnitten von einander gegenüberliegend angeordneten Seitenwänden des Fahrgastgroßraums aus dem Fahrgastgroßraum abgeführt wird.

### Stand der Technik

Bekannt ist es, einen Fahrgastgroßraum eines Reisezugwagens durch Konvektionswärme zu beheizen, wozu erwärmte Zuluft in seitlichen Bodenbereichen des Fahrgastgroßraums in diesen eingeführt wird. Die Zuluft transportiert die in ihr enthaltene Wärme an andere Orte innerhalb des Fahrgastgroßraums. Jedoch werden bei dieser bodennahen Zuluftzuführung Partikel, beispielsweise Staub, Viren und Allergene, vom Boden des Fahrgastgroßraums aufgewirbelt, was insbesondere für Allergiker unangenehm sein und dazu führen kann, dass sich aufgewirbelte Viren ungehindert im Fahrgastgroßraum verteilen und an Flächen ablagern, wie beispielsweise an Sitzen oder Haltestangen, oder direkt vom Menschen eingeatmet werden.

Zur Lüftung des Fahrgastgroßraums wird herkömmlich zudem ein Hauptzuluftstrom über Deckenkanäle in den Fahrgastgroßraum geblasen, was zum Entstehen einer Zugluftströmung im Fahrgastgroßraum führen kann, die von Passagieren als unangenehm empfunden wird.

Werden die Türen eines Reisezugwagens mit beheiztem Fahrgastgroßraum geöffnet, entweicht die warme Luft aus dem Fahrgastgroßraum und kalte Luft strömt gleichzeitig in den Fahrgastgroßraum ein. Dabei entstehen innerhalb des Fahrgastgroßraums unterschiedliche Temperaturzonen, da die warme Luft aufsteigt und die kalte Luft absinkt. Dadurch ist es im Kopfbereich warm und im Fußbereich kalt, was von Passagieren ebenfalls als unangenehm empfunden wird.

EP 2 868 502 A1 offenbart ein Schienenfahrzeug mit einem Innenraum zur Personenbeförderung und einer Belüftungseinrichtung zur Belüftung des Innenraums. Die Belüftungseinrichtung weist einen Einlass zum Einbringen von Zuluft in den Innenraum und einen Auslass zum Abführen von Abluft aus dem Innenraum auf. Der Einlass wird durch eine Vielzahl von ersten Öffnungen gebildet, die flächig im Wesentlichen über die gesamte Oberfläche einer ersten Wandung verteilt sind, wobei diese erste Wandung den Boden, die Decke oder eine Seitenwand des Innenraums bildet. Der Auslass wird durch eine Vielzahl von zweiten Öffnungen gebildet, die flächig im Wesentlichen über die gesamte Oberfläche einer zweiten Wandung verteilt sind, die gegenüber der ersten Wandung liegt und den Boden, die Decke oder eine Seitenwand des Innenraums bildet. Ein Boden mit solchen zweiten Öffnungen ist jedoch nachteilig, da die Öffnungen durch Verunreinigungen verstopfen können und Nässe in die zweiten Öffnungen fließen kann, was mit der Gefahr von Keimbildung und/oder Schimmelbildung und dergleichen einhergehen kann.

US 5 389 035 A offenbart eine Belüftungsvorrichtung für ein Beförderungsmittel. Die Belüftungsvorrichtung weist eine erste Leitung zur Zufuhr von aufbereiteter Luft in ein Abteil, eine zweite Leitung zum Umwälzen von Luft in dem Abteil, eine dritte Leitung zur Entnahme von Luft in dem Abteil, eine einzelne Belüftungseinrichtung sowohl zum Ansaugen von Luft aus der Umgebung des Abteils als auch zur Abgabe von Luft an die Umgebung des Abteils, und eine Luftaufbereitungseinrichtung, die von der Umgebung des Abteils über die Belüftungseinrichtung angesaugte Luft mit aus dem Innern des Abteils über die zweite Leitung umgewälzter Luft mischt, um sie aufzubereiten, auf. Die erste Leitung ist im oberen Teil eines Fahrzeugs angeordnet und über eine vom unteren Teil des Fahrzeugs zu dessen oberem Teil verlaufende Steigleitung und eine unter dem Fahrzeugboden angeordnete horizontale Leitung mit der Luftaufbereitungseinrichtung verbunden. Die zweite Leitung ist im unteren Teil des Fahrzeugs nahe dem Boden angeordnet und mit der Luftaufbereitungseinrichtung verbunden. Die dritte Leitung ist nahe dem Boden des Fahrzeugs in dessen unterem Teil angeordnet und mit der Belüftungseinrichtung verbunden.

### Offenbarung der Erfindung

Eine Aufgabe der Erfindung ist es, eine verbesserte Heizung und/oder Lüftung eines Fahrgastgroßraums einer Personentransportanordnung eines Reisezugwagens oder eines Omnibus zu schaffen.

Diese Aufgabe wird durch die unabhängigen Patentansprüche gelöst. Vorteilhafte Ausgestaltungen sind in den abhängigen Patentansprüchen, der nachfolgenden Beschreibung und den Figuren wiedergegeben, wobei diese Ausgestaltungen jeweils für sich genommen oder Kombination von wenigstens zwei dieser Ausgestaltungen miteinander einen vorteilhaften und/oder weiterbildenden Aspekt der Erfindung darstellen können. Vorteilhafte Ausgestaltungen der Personentransportanordnung können dabei vorteilhaften Ausgestaltungen des Verfahrens entsprechen, und umgekehrt, selbst wenn hierauf im Folgenden nicht explizit hingewiesen wird.

Eine erfindungsgemäße Personentransportanordnung für einen Reisezugwagen oder einen Omnibus weist wenigstens einen Fahrgastgroßraum und wenigstens ein System zum Heizen und/oder Lüften des Fahrgastgroßraums auf, wobei das System wenigstens eine Zulufteinrichtung zum Einführen von Zuluft in den Fahrgastgroßraum und wenigstens eine Ablufteinrichtung zum Abführen von Abluft aus dem Fahrgastgroßraum aufweist und die Zulufteinrichtung wenigstens ein Deckenelement aufweist, das zumindest einen Abschnitt einer Decke des Fahrgastgroßraums bildet, und wobei die Ablufteinrichtung wenigstens zwei langgestreckt ausgebildete Luftabführeinheiten aufweist, die sich in einer Längsrichtung des Fahrgastgroßraums jeweils zumindest über wenigstens einen Sitzbereich des Fahrgastgroßraums durchgehend erstrecken und die an bodenseitigen Endabschnitten von einander gegenüberliegend angeordneten Seitenwänden des Fahrgastgroßraums angeordnet sind. Erfindungsgemäß sind an dem Deckenelement Zuluftöffnungen flächig verteilt angeordnet und das System ist eingerichtet, dem Fahrgastgroßraum als Zuluft ausschließlich Frischluft zuzuführen. Erfindungsgemäß wird dem Fahrgastgroßraum als Zuluft ausschließlich Frischluft zugeführt, so dass zur Lüftung und/oder Heizung der Personentransportanordnung keine aufwändige Filterung von Abluft erfolgen muss, um diese wieder dem Fahrgastgroßraum als Zuluft zuführen zu können. Dies vereinfacht deutlich den Aufbau der erfindungsgemäßen Personentransportanordnung bzw. von deren Lüftungs- und/oder Heizsystem und verhindert gleichzeitig zuverlässig, dass Partikel, insbesondere Viren und Allergene, mit der Zuluft in den Fahrgastgroßraum eingeführt werden.

Zudem wird mit dem erfindungsgemäßen Lüftungs- und/oder Heizsystem keine Zuluft bodennah in den Fahrgastgroßraum eingeführt, sondern über das Deckenelement, wodurch zuverlässig verhindert wird, dass auf dem Boden des Fahrgastgroßraums befindliche Partikel, insbesondere Viren und Allergene, aufgewirbelt werden, was mit den oben beschriebenen Nachteilen einhergehen würde. Stattdessen werden solche Partikel zusammen mit der Abluft mittels der Luftabführeinheiten seitlich und bodennah aus dem Fahrgastgroßraum abgesaugt und über weitere Bauteile der Ablufteinrichtung in die Umgebung der Personentransportanordnung abgeführt. Mit dem erfindungsgemäßen Lüftungs- und/oder Heizsystem wird somit eine Viren- und Allergeneinwirkung auf Passagiere weitestgehend unterbunden.

Die Zulufteinrichtung ist derart ausgebildet, dass die Frischluft als laminare Luftströmung den Fahrgastgroßraum von der Decke zum Boden durchströmt, was eine seitliche Luftströmung von einem Passagier zum nächsten Passagier unterbindet, so dass eine Übertragung von Viren von einem Passagier auf den nächsten Passagier, die bei seitlichen Luftströmungen gegeben wäre, weitestgehend verhindert wird. Das erfindungsgemäße Lüftungs- und/oder Heizsystem sorgt somit für eine sehr saubere Luft in dem Fahrgastgroßraum und folglich zu einem geringen Infektionsrisiko für die Passagiere. Dabei wird die Luft in dem Fahrgastgroßraum in relativ kurzer Zeit durch eingeführte Frischluft erneuert, so dass die Qualität der Luft innerhalb des Fahrgastgroßraums der Qualität der Frischluft bzw. Außenluft entspricht.

Das System kann wenigstens ein Gebläse und/oder wenigstens eine Einrichtung zum Steuern und/oder Regeln eines Volumenstroms der Frischluft in den Fahrgastgroßraum aufweisen.

Das Deckenelement der Zulufteinrichtung kann einen Abschnitt einer Decke des Fahrgastgroßraums oder die gesamte Decke bilden. Die Zuluftöffnungen können rasterartig vollflächig verteilt an dem Deckenelement angeordnet sein. Die Formgebung der einzelnen Zuluftöffnungen ist vorzugsweise derart auf die Strömungsgeschwindigkeit der sie durchströmenden Frischluft abgestimmt, dass aus den Zuluftöffnungen laminare Frischluftströmungen austreten. Die Zulufteinrichtung kann auch zwei oder mehr solcher Deckenelemente aufweisen.

Jede Luftabführeinheit erstreckt sich in Längsrichtung des Fahrgastgroßraums durchgehend über wenigstens einen Sitzbereich des Fahrgastgroßraums und/oder über den größten Teil der Länge bzw. Längserstreckung des Fahrgastinnenraums. Unter dem Sitzbereich des Fahrgastgroßraums ist ein Bereich des Fahrgastgroßraums zu verstehen, in dem Sitze für Passagiere angeordnet sind. Die Luftabführeinheiten erstrecken sich zumindest in einem solchen Sitzbereich, eventuell auch darüber hinaus. Die jeweilige Luftabführeinheit kann sich auch über die gesamte Länge des Fahrgastgroßraums erstrecken. An der jeweiligen Luftabführeinheit kann wenigstens eine, beispielsweise schlitzförmig ausgebildete, Lufteinlassöffnung angeordnet sein, über die die Abluft in die Luftabführeinheit eintreten kann. Alternativ oder additiv kann eine dem Fahrgastgroßraum zugewandte Seitenwand der jeweiligen Luftabführeinheit in einem Abstand zum Boden des Fahrgastgroßraums angeordnet sein, so dass zwischen dem bodennahen unteren Rand der Seitenwand und dem Boden ein Lufteinlassschlitz ausgebildet ist, durch den die Abluft in die Luftabführeinheit eintreten kann. Die jeweilige Luftabführeinheit kann an der jeweiligen Seitenwand und/oder am Boden des Fahrgastgroßraums befestigt sein.

Die Personentransportanordnung kann einen Personentransportabschnitt eines Reiszugwagens eines Fernzugs oder eines Nahverkehrszugs bzw. Regionalverkehrszugs, beispielsweise einer S-Bahn oder einer U-Bahn, bilden. Alternativ kann die Personentransportanordnung einen Personentransportabschnitt eines Omnibus bilden.

Gemäß einer vorteilhaften Ausgestaltung weist das System wenigstens einen mit der Zulufteinrichtung und mit einer Umgebung der Personentransportanordnung verbundenen Frischluftkanal auf, der zumindest größtenteils oberhalb des Fahrgastgroßraums angeordnet ist. Durch die Anordnung des Frischluftkanals größtenteils oder vollständig oberhalb des Fahrgastgroßraums werden durch Fahrtwind an dem Frischluftkanal erzeugte Geräusche nur in sehr geringem Ausmaß auf den Fahrgastgroßraum übertragen, was den Reisekomfort erhöht. Der Frischluftkanal ist weitestgehend entfernt von Passagieren angeordnet.

Gemäß einer weiteren vorteilhaften Ausgestaltung weist das System für jede Luftabführeinheit wenigstens einen mit der jeweiligen Luftabführeinheit verbundenen Abluftkanal auf, der an einem zumindest teilweise oberhalb des Fahrgastgroßraums angeordneten Abschnitt der Personentransportanordnung mit der Umgebung der Personentransportanordnung verbunden ist. Durch die Anordnung der Verbindung des Abluftkanals teilweise oder vollständig oberhalb des Fahrgastgroßraums bzw. die damit einhergehende Anordnung dieser Verbindung weitestgehend entfernt von dem Fahrgastgroßraum werden durch Fahrtwind an dem Abluftkanal erzeugte Geräusche nur in sehr geringem Ausmaß auf den Fahrgastgroßraum übertragen, was den Reisekomfort erhöht. Der Abluftkanal verläuft in Höhenrichtung durch eine Seitenwandstruktur der Personentransportanordnung.

Gemäß einer weiteren vorteilhaften Ausgestaltung weist das System wenigstens einen an dem Frischluftkanal und dem Abluftkanal angeordneten Wärmetauscher auf, mit dem während eines Heizbetriebs Wärme von der Abluft auf die Frischluft übertragbar ist und während eines Kühlbetriebs Wärme von der Frischluft auf die Abluft übertragbar ist. Hierdurch kann der Energieverbrauch zum Heizen bzw. Kühlen des Fahrgastgroßraums verringert werden, da während des Heizbetriebs in der Abluft enthaltene Wärme über den Wärmetauscher zurückgewonnen, auf die Frischluft übertragen und somit dem Fahrgastgroßraum wieder zugeführt werden kann. Im Falle des Kühlbetriebs kann die Frischluft mittels des mit der gekühlten Abluft gekühlten Wärmetauschers gekühlt werden. Der Wärmetauscher kann beispielsweise einen Kreuzstromwärmetauscher sein. Durch die Verwendung eines Wärmetauschers kann eine Vermischung der Frischluft mit der Abluft zuverlässig verhindert werden.

Gemäß einer weiteren vorteilhaften Ausgestaltung ist die Zulufteinrichtung eingerichtet, dem Fahrgastgroßraum die Frischluft mit einer Strömungsgeschwindigkeit von maximal 0,25 m/s zuzuführen. Hiernach wird die Frischluft als Quellluft in den Fahrgastgroßraum eingebracht, was eine als unangenehm empfundene Zugluft verhindert und eine laminare Strömung der Frischluft innerhalb des Fahrgastgroßraums ermöglicht.

Gemäß einer weiteren vorteilhaften Ausgestaltung ist das Deckenelement elektrisch beheizbar. Durch diese Beheizung des Deckenelements gibt dieses Wärmestrahlung ab. Aufgrund der Wärmestrahlung und die höhere Oberflächentemperatur des Deckenelements kann im Heizbetrieb des Lüftungs- und Heizsystems die Raumlufttemperatur niedriger gehalten werden, ohne dass dies von Passagieren als unangenehm empfunden wird, da auf die Passagiere die Wärmestrahlung auftrifft, so dass die Passagiere die Raumlufttemperatur als höher empfinden als sie tatsächlich ist. Durch die Realisierung der geringeren Raumlufttemperatur reduzieren sich die Energiekosten der Personentransportanordnung. Beispielsweise kann die Raumlufttemperatur um etwa 2°C bis 3°C abgesenkt werden, wobei pro Grad etwa 6% Energiekosten eingespart werden. Durch die geringere Raumlufttemperatur kann die Luftfeuchtigkeit höher gehalten werden bzw. zu trockene Raumluft vermieden werden. Das Deckenelement kann beispielsweise zumindest teilweise durch eine Heizfolie bzw. Heizplatte gemäß EP 3 621 409 A1 ausgebildet sein, allerdings mit daran angeordneten Zuluftöffnungen zwischen elektrischen Leitern. Durch die Wärmestrahlung wird die Raumluft nur unwesentlich erwärmt, wohingegen Objekte und Passagiere erwärmt werden, die dann wiederum eine erhöhte Wärmestrahlung abgeben.

Gemäß einer weiteren vorteilhaften Ausgestaltung weist die Personentransportanordnung wenigstens ein den Fahrgastgroßraum teilweise begrenzendes, elektrisch betreibbares Flächenheizelement auf. Mit Bezug auf das Flächenheizelement sind dieselben Vorteile wie oben mit Bezug auf das elektrisch beheizbare Deckenelement beschrieben verbunden. Das Flächenheizelement kann zumindest teilweise durch eine Heizfolie bzw. Heizplatte gemäß EP 3 621 409 A1 ausgebildet sein. Das Flächenheizelement kann beispielsweise ein Seitenwandelement sein.

Gemäß einer weiteren vorteilhaften Ausgestaltung bildet das Flächenheizelement zumindest einen Abschnitt eines Bodens des Fahrgastgroßraums. Im Ein- und Ausstiegbereich des Fahrgastgroßraums entweicht durch das Öffnen der dort befindlichen Türen die warme Innenraumluft aus dem Fahrgastgroßraum. Jedoch ist bei eingeschaltetem Flächenheizelement die Wärmestrahlung weiterhin vorhanden und wird nicht durch die einströmende kalte Luft abgeschwächt. In Wintermonaten ist zudem der Vorteil gegeben, dass Eis und Schneereste auf dem Boden des Fahrgastgroßraums schneller abtauen, was die Unfallgefahr für Passagiere durch Ausrutschen minimiert.

Gemäß einem erfindungsgemäßen Verfahren zum Heizen und/oder Lüften eines Fahrgastgroßraums einer Personentransportanordnung eines Reisezugwagens oder eines Omnibus wird eine Abluft im Bereich von bodenseitigen Endabschnitten von einander gegenüberliegend angeordneten Seitenwänden des Fahrgastgroßraums aus dem Fahrgastgroßraum abgeführt. Erfindungsgemäß wird dem Fahrgastgroßraum eine Zuluft über flächig verteilt an einer Decke des Fahrgastgroßraums angeordnete Zuluftöffnungen zugeführt und dem Fahrgastgroßraum als Zuluft ausschließlich Frischluft zugeführt.

Mit dem Verfahren sind die oben mit Bezug auf die Personentransportanordnung genannten Vorteile entsprechend verbunden. Insbesondere kann die Personentransportanordnung gemäß einer der oben genannten Ausgestaltungen oder einer Kombination von wenigstens zwei dieser Ausgestaltungen miteinander zur Durchführung des Verfahrens verwendet werden.

Gemäß einer vorteilhaften Ausgestaltung wird die Frischluft in einem zumindest größtenteils oberhalb des Fahrgastgroßraums angeordneten Bereich der Personentransportanordnung aus der Umgebung der Personentransportanordnung angesaugt. Mit dieser Ausgestaltung sind die oben mit Bezug auf die entsprechende Ausgestaltung der Personentransportanordnung verbundenen Vorteile entsprechend verbunden.

Gemäß einer weiteren vorteilhaften Ausgestaltung wird die Abluft in einem zumindest größtenteils oberhalb des Fahrgastgroßraums angeordneten Bereich der Personentransportanordnung in die Umgebung der Personentransportanordnung abgeführt. Mit dieser Ausgestaltung sind die oben mit Bezug auf die entsprechende Ausgestaltung der Personentransportanordnung verbundenen Vorteile entsprechend verbunden.

Gemäß einer weiteren vorteilhaften Ausgestaltung wird während eines Heizbetriebs Wärme von der Abluft auf die Frischluft übertragen und während eines Kühlbetriebs Wärme von der Frischluft auf die Abluft übertragen. Mit dieser Ausgestaltung sind die oben mit Bezug auf die entsprechende Ausgestaltung der Personentransportanordnung verbundenen Vorteile entsprechend verbunden.

Gemäß einer weiteren vorteilhaften Ausgestaltung wird die Frischluft dem Fahrgastgroßraum mit einer Strömungsgeschwindigkeit von maximal 0,25 m/s zugeführt. Mit dieser Ausgestaltung sind die oben mit Bezug auf die entsprechende Ausgestaltung der Personentransportanordnung verbundenen Vorteile entsprechend verbunden.

Gemäß einer weiteren vorteilhaften Ausgestaltung wird ein zumindest ein Teil der Zuluftöffnungen aufweisendes Deckenelement elektrisch beheizt. Mit dieser Ausgestaltung sind die oben mit Bezug auf die entsprechende Ausgestaltung der Personentransportanordnung verbundenen Vorteile entsprechend verbunden.

Gemäß einer weiteren vorteilhaften Ausgestaltung wird zumindest ein Abschnitt eines Bodens des Fahrgastgroßraums elektrisch beheizt. Mit dieser Ausgestaltung sind die oben mit Bezug auf die entsprechende Ausgestaltung der Personentransportanordnung verbundenen Vorteile entsprechend verbunden.

Im Folgenden wird die Erfindung unter Bezugnahme auf die beigefügten Figuren anhand einer bevorzugten Ausführungsform beispielhaft erläutert, wobei die nachfolgend erläuterten Merkmale sowohl jeweils für sich genommen als auch in unterschiedlicher Kombination miteinander einen vorteilhaften und/oder weiterbildenden Aspekt der Erfindung darstellen können.

### Kurze Beschreibung der Figuren

Es zeigt:
- Fig. 1: eine schematische Schnittdarstellung eines Ausführungsbeispiels für eine erfindungsgemäße Personentransportanordnung in einem Lüftungsbetrieb; und
- Fig. 2: eine schematische Schnittdarstellung der in Fig. 1 gezeigten Personentransportanordnung in einem Heizbetrieb.

### Ausführliche Beschreibung der Figuren

In den Figuren sind gleiche bzw. funktionsgleiche Bauteile mit denselben Bezugszeichen versehen. Eine wiederholte Beschreibung solcher Bauteile kann weggelassen sein.

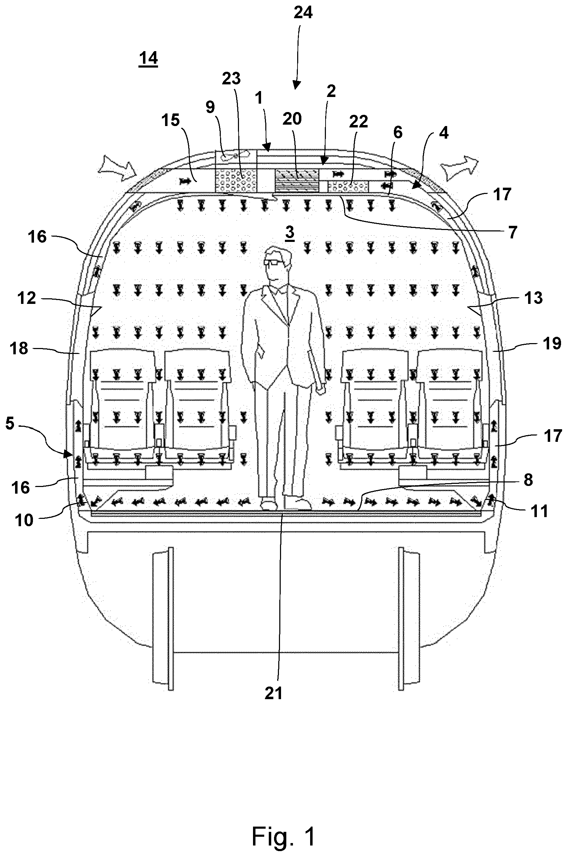

Fig. 1 zeigt eine schematische Schnittdarstellung eines Ausführungsbeispiels für eine erfindungsgemäße Personentransportanordnung 1 für einen Reisezugwagen 24 in einem Lüftungsbetrieb.

Die Personentransportanordnung 1 weist ein System 2 zum Heizen und/oder Lüften eines Fahrgastgroßraums 3 der Personentransportanordnung 1 auf. Das System 2 weist eine Zulufteinrichtung 4 zum Einführen von Zuluft in den Fahrgastgroßraum 3 und eine Ablufteinrichtung 5 zum Abführen von Abluft aus dem Fahrgastgroßraum 3 auf. Die Strömungen der Zuluft und der Abluft sind in Fig. 1 durch Pfeile angedeutet. Das System 2 ist eingerichtet, dem Fahrgastgroßraum 3 als Zuluft ausschließlich Frischluft zuzuführen.

Die Zulufteinrichtung 4 weist wenigstens ein Deckenelement 6 auf, das zumindest einen Abschnitt einer Decke 7 des Fahrgastgroßraums 3 bildet und an dem nicht gezeigte Zuluftöffnungen flächig verteilt angeordnet sind. Die Zulufteinrichtung 4 ist eingerichtet, dem Fahrgastgroßraum 3 die Frischluft mit einer Strömungsgeschwindigkeit von maximal 0,25 m/s zuzuführen. Dadurch strömt die Zuluft laminar von der Decke 7 zum Boden 8 des Fahrgastgroßraums 3, nahezu ohne Verwirbelungen, was durch die Parallelität der Pfeile angedeutet sein soll. Zudem weist die Zulufteinrichtung 4 ein Zuluftgebläse 9 auf. Das Deckenelement 6 kann elektrisch beheizbar sein.

Die Ablufteinrichtung 5 weist zwei langgestreckt ausgebildete Luftabführeinheiten 10 und 11 auf, die sich in einer Längsrichtung des Fahrgastgroßraums 3 jeweils zumindest über wenigstens einen Sitzbereich des Fahrgastgroßraums 3 durchgehend erstrecken und die an bodenseitigen Endabschnitten von einander gegenüberliegend angeordneten Seitenwänden 12 und 13 des Fahrgastgroßraums 3 angeordnet sind.

Das System 2 weist einen mit der Zulufteinrichtung 4 und mit einer Umgebung 14 der Personentransportanordnung 1 verbundenen Frischluftkanal 15 auf, der oberhalb des Fahrgastgroßraums 3 angeordnet ist. Das Zuluftgebläse 9 ist an dem Frischluftkanal 15 angeordnet. Zudem weist das System 2 für jede Luftabführeinheit 10 bzw. 11 wenigstens einen mit der jeweiligen Luftabführeinheit 10 bzw. 11 verbundenen Abluftkanal 16 bzw. 17 auf, der an einem oberhalb des Fahrgastgroßraums 3 angeordneten Abschnitt der Personentransportanordnung 1 mit der Umgebung 14 der Personentransportanordnung 1 verbunden ist. In der Schnittdarstellung ist ein mittlerer Abschnitt des jeweiligen Abluftkanals 16 bzw. 17 durch einen Fensterrahmen 18 bzw. 19 verdeckt.

Darüber hinaus weist das System 2 einen an dem Frischluftkanal 15 und dem Abluftkanal 16 bzw. 17 angeordneten Wärmetauscher 20 auf, mit dem während eines Heizbetriebs Wärme von der Abluft auf die Frischluft übertragbar ist und während eines Kühlbetriebs Wärme von der Frischluft auf die Abluft übertragbar ist. Um den Wärmetauscher 20 vor in der Abluft eventuell enthaltenen Verunreinigungen zu schützen, ist an dem Abluftkanal 16 bzw. 17 ein Luftfilter 22 vorgeschaltet. Um vorgegebenen Normen hinsichtlich der Qualität einer einem Fahrgastgroßraum zuführbaren Frischluft zu genügen, ist an dem Frischluftkanal 15 ein Luftfilter 23 angeordnet. Bei den Luftfiltern 22 und 23 handelt es sich nicht um Virenfilter bzw. Filter mit einer Filterwirksamkeit, die zum Ausfiltern von Viren geeignet ist. Die Verwendung von Virenfiltern ist für die Realisierung der Erfindung nicht erforderlich, insbesondere da dem Fahrgastgroßraum ausschließlich Frischluft zugeführt wird. Stattdessen weisen die Luftfilter 22 und 23 einen geringeren Luftwiderstand als Virenfilter auf, was mit geringeren Druckverlusten in der Abluft bzw. Frischluft einhergeht und letztendlich die Wirtschaftlichkeit der Personentransportanordnung 1 bzw. des Reisezugwagens 24 verbessert.

Die Personentransportanordnung 1 weist ferner ein den Fahrgastgroßraum 3 bodenseitig teilweise begrenzendes, elektrisch betreibbares Flächenheizelement 21 auf, das zumindest einen Abschnitt des Bodens 8 des Fahrgastgroßraums 3 bildet. In Fig. 1 ist das Flächenheizelement 21 abgeschaltet, so dass mit dem System 2 lediglich eine Lüftung des Fahrgastgroßraums 3 erfolgt.

Bei einem nicht gezeigten Reisezug, der wenigstens zwei entsprechend ausgebildete Reisezugwagen 24 aufweist, sollten aufeinanderfolgende Reisezugwagen 24 versetzt zueinander angeordnete Frischlufteinlässe und Abluftauslässe aufweisen, um zu verhindern, dass der nachfolgende Reisezugwagen 24 Frischluft ansaugt, die teilweise durch die Abluft des vorausfahrenden Reisezugwagens 24 gebildet ist.

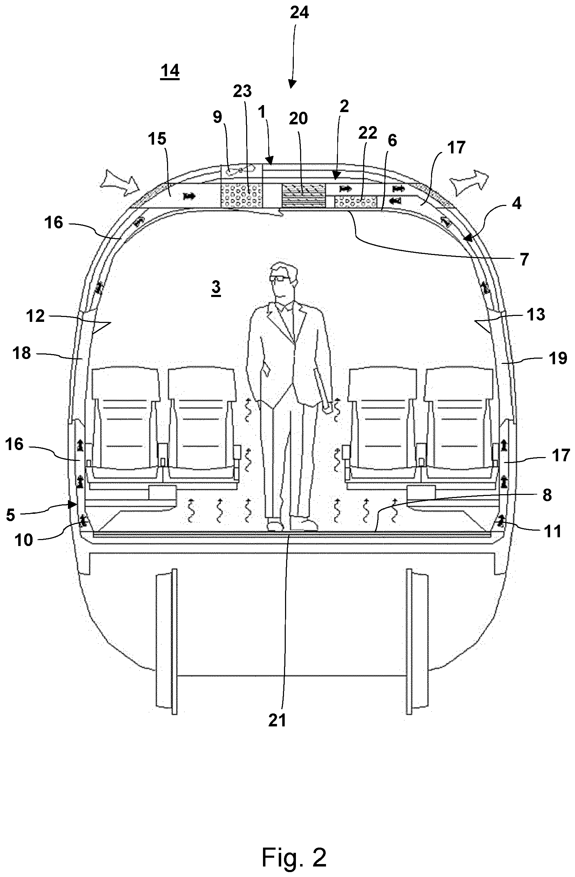

Fig. 2 zeigt eine schematische Schnittdarstellung der in Fig. 1 gezeigten Personentransportanordnung 1 in einem Heizbetrieb. In dem Heizbetrieb ist das Flächenheizelement 21 eingeschaltet, wodurch das Flächenheizelement 21 Wärmestrahlung abgibt, die durch die zur Decke 7 weisenden Pfeile angedeutet sein soll. Aus Gründen der Übersichtlichkeit sind in Fig. 2 die Pfeile aus Fig. 1 im Fahrgastinnenraum 3 weggelassen, was selbstverständlich nicht bedeuten soll, dass im Heizbetrieb kein Lüftungsbetrieb durchgeführt werden kann. Stattdessen wird im Heizbetrieb in der Regel auch der in Fig. 1 gezeigte Lüftungsbetrieb durchgeführt.

### Bezugszeichenliste

- 1: Personentransportanordnung
- 2: System
- 3: Fahrgastgroßraum
- 4: Zulufteinrichtung
- 5: Ablufteinrichtung
- 6: Deckenelement
- 7: Decke von 3
- 8: Boden von 3
- 9: Zuluftgebläse
- 10: Luftabführeinheit
- 11: Luftabführeinheit
- 12: Seitenwand von 3
- 13: Seitenwand von 3
- 14: Umgebung von 1
- 15: Frischluftkanal
- 16: Abluftkanal
- 17: Abluftkanal
- 18: Fensterrahmen
- 19: Fensterrahmen
- 20: Wärmetauscher
- 21: Flächenheizelement
- 22: Luftfilter
- 23: Luftfilter
- 24: Reisezugwagen

## Patentansprüche

1. Personentransportanordnung (1) für einen Reisezugwagen (24) oder einen Omnibus, aufweisend wenigstens einen Fahrgastgroßraum (3) und wenigstens ein System (2) zum Heizen und/oder Lüften des Fahrgastgroßraums (3), wobei das System (2) wenigstens eine Zulufteinrichtung (4) zum Einführen von Zuluft in den Fahrgastgroßraum (3) und wenigstens eine Ablufteinrichtung (5) zum Abführen von Abluft aus dem Fahrgastgroßraum (3) aufweist, wobei die Zulufteinrichtung (4) wenigstens ein Deckenelement (6) aufweist, das zumindest einen Abschnitt einer Decke (7) des Fahrgastgroßraums (3) bildet, wobei die Ablufteinrichtung (5) wenigstens zwei langgestreckt ausgebildete Luftabführeinheiten (10, 11) aufweist, die sich in einer Längsrichtung des Fahrgastgroßraums (3) jeweils zumindest über wenigstens einen Sitzbereich des Fahrgastgroßraums (3) durchgehend erstrecken und die an bodenseitigen Endabschnitten von einander gegenüberliegend angeordneten Seitenwänden (12, 13) des Fahrgastgroßraums (3) angeordnet sind, **dadurch gekennzeichnet, dass** an dem Deckenelement (6) Zuluftöffnungen flächig verteilt angeordnet sind und dass das System (2) eingerichtet ist, dem Fahrgastgroßraum (3) als Zuluft ausschließlich Frischluft zuzuführen.

2. Personentransportanordnung (1) nach Anspruch 1, **dadurch gekennzeichnet, dass** das System (2) wenigstens einen mit der Zulufteinrichtung (4) und mit einer Umgebung (14) der Personentransportanordnung (1) verbundenen Frischluftkanal (15) aufweist, der zumindest größtenteils oberhalb des Fahrgastgroßraums (3) angeordnet ist.

3. Personentransportanordnung (1) nach Anspruch 1 oder 2, **dadurch gekennzeichnet, dass** das System (2) für jede Luftabführeinheit (10, 11) wenigstens einen mit der jeweiligen Luftabführeinheit (10, 11) verbundenen Abluftkanal (16, 17) aufweist, der an einem zumindest teilweise oberhalb des Fahrgastgroßraums (3) angeordneten Abschnitt der Personentransportanordnung (1) mit der Umgebung (14) der Personentransportanordnung (1) verbunden ist.

4. Personentransportanordnung (1) nach Anspruch 3, **dadurch gekennzeichnet, dass** das System (2) wenigstens einen an dem Frischluftkanal (15) und dem Abluftkanal (16, 17) angeordneten Wärmetauscher (20) aufweist, mit dem während eines Heizbetriebs Wärme von der Abluft auf die Frischluft übertragbar ist und während eines Kühlbetriebs Wärme von der Frischluft auf die Abluft übertragbar ist.

5. Personentransportanordnung (1) nach einem der Ansprüche 1 bis 4, **dadurch gekennzeichnet, dass** die Zulufteinrichtung (4) eingerichtet ist, dem Fahrgastgroßraum (3) die Frischluft mit einer Strömungsgeschwindigkeit von maximal 0,25 m/s zuzuführen.

6. Personentransportanordnung (1) nach einem der Ansprüche 1 bis 5, **dadurch gekennzeichnet, dass** das Deckenelement (6) elektrisch beheizbar ist.

7. Personentransportanordnung (1) nach einem der Ansprüche 1 bis 6, **gekennzeichnet durch** wenigstens ein den Fahrgastgroßraum (3) teilweise begrenzendes, elektrisch betreibbares Flächenheizelement (21).

8. Personentransportanordnung (1) nach Anspruch 7, **dadurch gekennzeichnet, dass** das Flächenheizelement (21) zumindest einen Abschnitt eines Bodens (8) des Fahrgastgroßraums (3) bildet.

9. Reisezugwagen (24) oder Omnibus, **gekennzeichnet durch** wenigstens eine Personentransportanordnung (1) nach einem der Ansprüche 1 bis 8.

10. Verfahren zum Heizen und/oder Lüften eines Fahrgastgroßraums (3) einer Personentransportanordnung (1) eines Reisezugwagens (24) oder eines Omnibus, wobei eine Abluft im Bereich von bodenseitigen Endabschnitten von einander gegenüberliegend angeordneten Seitenwänden (12, 13) des Fahrgastgroßraums (3) aus dem Fahrgastgroßraum (3) abgeführt wird, **dadurch gekennzeichnet, dass** dem Fahrgastgroßraum (3) eine Zuluft über flächig verteilt an einer Decke (7) des Fahrgastgroßraums (3) angeordnete Zuluftöffnungen zugeführt wird und dass dem Fahrgastgroßraum (3) als Zuluft ausschließlich Frischluft zugeführt wird.

11. Verfahren nach Anspruch 10, **dadurch gekennzeichnet, dass** die Frischluft in einem zumindest größtenteils oberhalb des Fahrgastgroßraums (3) angeordneten Bereich der Personentransportanordnung (1) aus einer Umgebung (14) der Personentransportanordnung (1) angesaugt wird.

12. Verfahren nach Anspruch 10 oder 11, **dadurch gekennzeichnet, dass** die Abluft in einem zumindest größtenteils oberhalb des Fahrgastgroßraums (3) angeordneten Bereich der Personentransportanordnung (1) in die Umgebung (14) der Personentransportanordnung (1) abgeführt wird.

13. Verfahren nach einem der Ansprüche 10 bis 12, **dadurch gekennzeichnet, dass** während eines Heizbetriebs Wärme von der Abluft auf die Frischluft übertragen wird und während eines Kühlbetriebs Wärme von der Frischluft auf die Abluft übertragen wird.

14. Verfahren nach einem der Ansprüche 10 bis 13, **dadurch gekennzeichnet, dass** die Frischluft dem Fahrgastgroßraum (3) mit einer Strömungsgeschwindigkeit von maximal 0,25 m/s zugeführt wird.

15. Verfahren nach einem der Ansprüche 10 bis 14, **dadurch gekennzeichnet, dass** ein zumindest ein Teil der Zuluftöffnungen aufweisendes Deckenelement (6) elektrisch beheizt wird.

16. Verfahren nach einem der Ansprüche 10 bis 15, **dadurch gekennzeichnet, dass** zumindest ein Abschnitt eines Bodens (8) des Fahrgastgroßraums (3) elektrisch beheizt wird.

## Claims

1. Passenger transportation arrangement (1) for a passenger train carriage (24) or a bus, comprising at least one large passenger space (3) and at least one system (2) for heating and/or ventilating the large passenger space (3), wherein the system (2) comprises at least one supply air means (4) for introducing supply air into the large passenger space (3), and at least one exhaust air means (5) for discharging exhaust air out of the large passenger space (3), wherein the supply air means (4) comprises at least one ceiling element (6) which forms at least one portion of a ceiling (7) of the large passenger space (3), wherein the exhaust air means (5) comprises at least two elongate air removal units (10, 11) which extend continuously, in a longitudinal direction of the large passenger space (3), in each case at least over at least one seating area of the large passenger space (3) and which are arranged on floor-side end portions of side walls (12, 13) of the large passenger space (3) that are arranged opposite one another, **characterised in that** supply air openings are arranged distributed in a planar manner on the ceiling element (6), and that the system (2) is designed to supply the large passenger space (3) exclusively with fresh air as the supply air.

2. Passenger transportation arrangement (1) according to claim 1, **characterised in that** the system (2) comprises at least one fresh air channel (15) that is connected to the supply air means (4) and to surroundings (14) of the passenger transportation arrangement (1), which channel is arranged at least largely above the large passenger space (3).

3. Passenger transportation arrangement (1) according to either claim 1 or claim 2, **characterised in that** the system (3) comprises at least one exhaust air channel (16, 17), connected to the respective air discharge unit (10, 11), for each air discharge unit (10, 11), which channel is connected to the surroundings (14) of the passenger transport arrangement (1) at a portion of the passenger transport arrangement (1) that is arranged at least in part above the large passenger space (3).

4. Passenger transportation arrangement (1) according to claim 3, **characterised in that** the system (2) comprises at least one heat exchanger (20) which is arranged on the fresh air channel (15) and the exhaust air channel (16, 17) and by means of which heat from the exhaust air can be transferred to the fresh air during heating operation, and heat from the fresh air can be transferred to the exhaust air during cooling operation.

5. Passenger transportation arrangement (1) according to any of claims 1 to 4, **characterised in that** the supply air means (4) is designed to supply the fresh air to the large passenger space (3) at a flow rate of at most 0.25 m/s.

6. Passenger transportation arrangement (1) according to any of claims 1 to 5, **characterised in that** the ceiling element (6) can be electrically heated.

7. Passenger transportation arrangement (1) according to any of claims 1 to 6, **characterised by** at least one electrically operable panel heating element (21) which defines the large passenger space (3) in part.

8. Passenger transportation arrangement (1) according to claim 7, **characterised in that** the panel heating element (21) forms at least a portion of a floor (8) of the large passenger space (3).

9. Passenger train carriage (24) or bus, **characterised by** at least one passenger transportation arrangement (1) according to any of claims 1 to 8.

10. Method for heating and/or ventilating a large passenger space (3) of a passenger transportation arrangement (1) of a passenger train carriage (24) or of a bus, wherein exhaust air is discharged out of the large passenger space (3) in the region of floor-side end portions of side walls (12, 13) of the large passenger space (3) that are arranged opposite one another, **characterised in that** a supply air is supplied to the large passenger space (3) via supply air openings that are arranged so as to be distributed in a planar manner on a ceiling (7) of the large passenger space (3), and **in that** exclusively fresh air is supplied to the large passenger space (3) as supply air.

11. Method according to claim 10, **characterised in that** the fresh air is suctioned out of surroundings (14) of the passenger transportation arrangement (1), in a region of the passenger transportation arrangement (1) that is arranged at least largely above the large passenger space (3).

12. Method according to either claim 10 or claim 11, **characterised in that** the exhaust air is discharged into the surroundings (14) of the passenger transportation arrangement (1) in a region of the passenger transportation arrangement (1) that is arranged at least largely above the large passenger space (3).

13. Method according to any of claims 10 to 12, **characterised in that** heat is transferred from the exhaust air to the fresh air during heating operation, and heat is transferred from the fresh air to the exhaust air during cooling operation.

14. Method according to any of claims 10 to 13, **characterised in that** the fresh air is supplied to the large passenger space (3) at a flow rate of at most 0.25 m/s.

15. Method according to any of claims 10 to 14, **characterised in that** a ceiling element (6) comprising at least some of the supply air openings is electrically heated.

16. Method according to any of claims 10 to 15, **characterised in that** at least a portion of a floor (8) of the large passenger space (3) is electrically heated.

## Revendications

1. Ensemble de transport de personnes (1) pour une voiture de voyageurs (24) ou un bus, présentant au moins un grand compartiment pour passagers (3) et au moins un système (2) pour chauffer et/ou aérer le grand compartiment pour passagers (3), dans lequel le système (2) présente au moins un dispositif d'amenée d'air (4) destiné à introduire de l'air entrant dans le grand compartiment pour passagers (3) et au moins un dispositif d'évacuation d'air (5) destiné à évacuer de l'air sortant hors du grand compartiment pour passagers (3), dans lequel le dispositif d'amenée d'air (4) présente au moins un élément de plafond (6), qui forme au moins une section d'un plafond (7) du grand compartiment pour passagers (3), dans lequel le dispositif d'évacuation d'air (5) présente au moins deux unités d'évacuation d'air (10, 11) réalisées de manière étirée en longueur, qui s'étendent de manière continue respectivement au moins au-delà d'au moins une zone de sièges du grand compartiment pour passagers (3) dans un sens longitudinal du grand compartiment pour passagers (3) et qui sont disposées sur des sections d'extrémité côté sol de parois latérales (12, 13), disposées de manière à se faire face les unes les autres, du grand compartiment pour passager (3), **caractérisé en ce que** des ouvertures pour air entrant sont disposées de manière répartie en surface sur l'élément de plafond (6), et que le système (2) est mis au point pour amener de l'air frais exclusivement en tant qu'air entrant au grand compartiment pour passagers (3).

2. Ensemble de transport de personnes (1) selon la revendication 1, **caractérisé en ce que** le système (2) présente au moins un canal à air frais (15) relié au dispositif d'amenée d'air (4) et à un environnement (14) de l'ensemble de transport de personnes (1), qui est disposé au moins en grande partie au-dessus du grand compartiment pour passagers (3).

3. Ensemble de transport de personnes (1) selon la revendication 1 ou 2, **caractérisé en ce que** le système (2) présente pour chaque unité d'évacuation d'air (10, 11) au moins un canal à air sortant (16, 17) relié à l'unité d'évacuation d'air (10, 11) respective, qui est relié à l'environnement (14) de l'ensemble de transport de personnes (1) sur une section, disposée au moins en partie au-dessus du grand compartiment de passagers (3), de l'ensemble de transport de personnes (1).

4. Ensemble de transport de personnes (1) selon la revendication 3, **caractérisé en ce que** le système (2) présente au moins un échangeur de chaleur (20) disposé sur le canal à air frais (15) et le canal à air sortant (16, 17), avec lequel de la chaleur peut être transférée depuis l'air sortant à l'air frais pendant en mode de chauffage et de la chaleur peut être transférée depuis l'air frais à l'air sortant pendant un mode de refroidissement.

5. Ensemble de transport de personnes (1) selon l'une quelconque des revendications 1 à 4, **caractérisé en ce que** le dispositif d'amenée d'air (4) est mis au point pour amener au grand compartiment pour passagers (3) l'air frais avec une vitesse d'écoulement de 0,25 m/s au maximum.

6. Ensemble de transport de personnes (1) selon l'une quelconque des revendications 1 à 5, **caractérisé en ce que** l'élément de plafond (6) peut être chauffé de manière électrique.

7. Ensemble de transport de personnes (1) selon l'une quelconque des revendications 1 à 6, **caractérisé par** au moins un élément de chauffage de surface (21) pouvant fonctionner de manière électrique, délimitant en partie le grand compartiment pour passagers (3).

8. Ensemble de transport de personnes (1) selon la revendication 7, **caractérisé en ce que** l'élément de chauffage de surface (21) forme au moins une section d'un sol (8) du grand compartiment pour passagers (3).

9. Voiture de voyageurs (24) ou bus, **caractérisée**/**caractérisé par** au moins un ensemble de transport de personnes (1) selon l'une quelconque des revendications 1 à 8.

10. Procédé pour chauffer et/ou aérer un grand compartiment pour passagers (3) d'un ensemble de transport de personnes (1) d'une voiture de voyageurs (24) ou d'un bus, dans lequel un air sortant est évacué du grand compartiment pour voyageurs (3) dans la zone de sections d'extrémité côté sol de parois latérales (12, 13), disposées de manière à se faire face les unes les autres, du grand compartiment pour passagers (3), **caractérisé en ce qu'**un air entrant est amené au grand compartiment pour voyageurs (3) par l'intermédiaire d'ouvertures pour air entrant disposées de manière répartie en surface sur un plafond (7) du grand compartiment pour voyageurs (3), et de l'air frais exclusivement est amené en tant qu'air entrant au grand compartiment pour passagers (3).

11. Procédé selon la revendication 10, **caractérisé en ce que** l'air frais est aspiré depuis un environnement (14) de l'ensemble de transport de personnes (1) dans une zone, disposée au moins en grande partie au-dessus du grand compartiment pour passagers (3), de l'ensemble de transport de personnes (1).

12. Procédé selon la revendication 10 ou 11, **caractérisé en ce que** l'air sortant est évacué dans l'environnement (14) de l'ensemble de transport de personnes (1) dans une zone, disposée au moins en grande partie au-dessus du grand compartiment pour passagers (3), de l'ensemble de transport de personnes (1).

13. Procédé selon l'une quelconque des revendications 10 à 12, **caractérisé en ce que** de la chaleur est transférée de l'air sortant à l'air frais pendant un mode de chauffage, et de la chaleur est transférée depuis l'air frais à l'air sortant pendant un mode de refroidissement.

14. Procédé selon l'une quelconque des revendications 10 à 13, **caractérisé en ce que** l'air frais est amené au grand compartiment pour passagers (3) avec une vitesse d'écoulement de 0,25 m/s au maximum.

15. Procédé selon l'une quelconque des revendications 10 à 14, **caractérisé en ce qu'**un élément de plafond (6) présentant au moins une partie des ouvertures pour air entrant est chauffé de manière électrique.

16. Procédé selon l'une quelconque des revendications 10 à 15, **caractérisé en ce qu'**au moins une section d'un sol (8) du grand compartiment pour passagers (3) est chauffée de manière électrique.
